# EUROPEAN PATENT SPECIFICATION

(11) **EP 2 769 875 B1**
(45) Date of publication and mention of the grant of the patent: **25.05.2022**
(21) Application number: 14156891.5
(22) Date of filing: 26.02.2014
(51) Int. Cl.: B60L 13/03

(54) **Electrically powered transportation system**
Elektrisch angetriebenes Transportsystem
Système de transport alimenté électriquement

(30) Priority: 26.02.2013 IT MI20130274
(43) Date of publication of application: 27.08.2014
(73) Proprietor: LEITNER S.p.A., Vipiteno (BZ) (IT)
(72) Inventor: Erharter, Klaus, 39038 San Candido (IT); Wieser, Hartmut, 39040 Racines (IT)
(74) Representative: Bernotti, Andrea

(56) References cited:
- EP-A2- 2 289 731
- EP-A2- 2 344 358
- EP-B1- 2 344 358
- WO-A2-2008/090129
- GB-A- 2 491 651
- US-A- 3 712 240
- None

## Description

The present invention relates to an electrically powered transportation system.

Using linear electric motors on passenger and/or freight transportation systems is known. Systems of this sort usually comprise one or more transportation units, possibly comprising a plurality of cars connected in trains, which run along a given path and are powered by a linear electric motor. The linear electric motor in turn comprises a stator, which extends along the path; and, for each transportation unit or train of transportation units, a slider which performs the same function as a rotor in conventional rotary synchronous motors. In other words, the stator and slider interact by means of a sliding, e.g. sinusoidal, electromagnetic field, which exerts a drive force on the slider to move it along the path. To simplify construction and operation, the linear motors of transportation systems are normally synchronous, and the slider is a permanent-magnet type. Though, theoretically, other types of linear electric motors may also be used.

Linear electric motors are used, for example, for driving transportation units in self-clamping cable transportation system stations.

One problem limiting the use of linear electric motors on transportation systems is the need to avoid interrupting energy transfer to the slider. Linear stators, in fact, extend substantially continuously along the path to avoid dead zones in which drive to the sliders is cut off. So the path must be defined in a dedicated area with no obstacles, and is not easily integrated, as would be desirable, with other community or individual transportation systems.

This problem is encountered, for example, though not exclusively, in the installation of urban passenger transportation systems, which is seriously complicated by the obvious difficulty of creating or adapting existing dedicated areas. Electromagnetic propulsion can therefore only be used within very limited areas (such as cable transportation system stations) or along dedicated routes with no obstacles or intersections.

Known linear electric motor transportation systems are therefore understandably difficult, if not impossible, to integrate in ordinary traffic networks, which inevitably involve intersections with other transportation means, crossings, and the like.

For example, known linear electric motor transportation systems are unsuitable for use as urban tram lines.

EP 2 344 358 A2 discloses a transportation system as defined in the preamble of claim 1.

An example of a known transportation system is disclosed in US 3 712 240 A. A magnetic field generating device generates a magnetic field along a path through which transportation unit move. Each transportation unit is equipped with a propulsion device comprising a magnetic interaction assembly that cooperates with the magnetic field generating device to move the transportation unit. The magnetic field generating device comprises segments separated by an interruption region of a length shorter than a distance between a front end and a rear end of the magnetic interaction assembly. Other examples of known transportation system are disclosed in WO 2008/090129 A2, in EP 2 289 731 A1 and in GB 2 491 651 A.

It is an object of the present invention to provide a transportation system designed to eliminate the above restrictions.

According to the present invention, there is provided a transportation system comprising:
at least one transportation unit movable along a given path;
a magnetic field generating device configured to generate a magnetic field along at least a portion of the path and comprising a plurality of windings embedded in an elongated body and divided into groups, each corresponding to a respective electric phase; and
a propulsion device housed on the transportation unit and cooperating with the magnetic field to move the transportation unit along the path;
wherein:
   the propulsion device comprises a magnetic interaction assembly housed on the transportation unit and arranged to interact with the magnetic field generated by the magnetic field generating device; and the magnetic field generating device comprises at least a first segment and a second segment arranged successively along the path and separated by an interruption region of a length shorter than the distance between the front end and the rear end of the magnetic interaction assembly ;
   characterized in that the magnetic field generating device comprises a plurality of modules selectively activatable by passage of the transportation unit; and
   wherein each module comprises:
      a peripheral control device connected to a supply source; and
      a proximity sensor;
      characterized in that:
         each stator segment comprises a plurality of consecutive, contiguous modules;
         the proximity sensor of each module is configured to supply a proximity signal to the respective peripheral control device in response to passage of the transportation unit;
         wherein the peripheral control device is configured to supply the windings from the supply source in response to the proximity signal;
         and wherein the length of the interruption region is such that an average R.M.S. value of the magnetic field is less in the interruption region than in the first segment and second segment when active.

This way, the interruption region can easily be overcome with no risk of stoppage in a dead zone cutting off drive power to the transportation unit. The system so designed is especially suitable for integration in urban or suburban networks, where inevitable intersections with roads or other transportation lines may impose interruptions of several metres in length between successive segments of the magnetic field generating device. More specifically, thanks to the design of the magnetic interaction assembly, the transportation unit can travel along the path with no need for batteries, which are expensive, have a fairly limited working life, and frequently need replacing due to malfunctions.

According to a further aspect of the invention, the magnetic interaction assembly comprises a first magnetic-field-responsive element and a second magnetic-field-responsive element located in a front portion and a rear portion respectively of the transportation unit); and the length of the interruption region is shorter than the distance between the first magnetic-field-responsive element and the second magnetic-field-responsive element.

Because the magnetic-field-responsive elements only occupy part of the length of the transportation unit, the magnetic interaction assembly so designed has the advantage of being compact and requiring only a small plurality of component parts.

According to a further aspect of the invention, the magnetic field generating device and the magnetic interaction assembly form a linear electric motor.

This way, the drive force is applied to the magnetic interaction assembly and transmitted directly by this to the body of the transportation unit, thus eliminating the need for a mechanical transmission between the propulsion device, and so improving efficiency.

According to a further aspect of the invention, the magnetic interaction assembly is a permanent-magnet type.

This solution has the advantage of requiring no power supply on the transportation unit, thus simplifying construction and improving safety, especially if the system is used for passenger transport.

Some non-limiting embodiments of the present invention will be described by way of example with reference to the attached drawings, in which :
Figure 1 shows a schematic side view of a transportation system in accordance with one embodiment of the present invention;
Figure 2 shows a schematic bottom view of a portion of a magnetic field generating device incorporated in the Figure 1 transportation system;
Figure 3 shows a schematic bottom view of a transportation unit forming part of the Figure 1 transportation system;
Figures 4-6 show the Figure 3 transportation unit in transit over an interruption region of the Figure 2 magnetic field generating device;
Figure 7 shows a schematic bottom view of a transportation unit of a transportation system in accordance with a different embodiment of the present invention;
Figure 8 shows the Figure 7 transportation unit in transit over an interruption region of the Figure 2 magnetic field generating device;
Figure 9 shows a schematic bottom view of a transportation unit of a transportation system in accordance with a further embodiment of the present invention;
Figure 10 shows the Figure 9 transportation unit in transit over an interruption region of the Figure 2 magnetic field generating device;
Figure 11 shows a block diagram of a portion of a propulsion device on the Figure 9 transportation unit;
Figure 12 shows a schematic bottom view of a transportation unit of a transportation system in accordance with a further embodiment of the present invention.

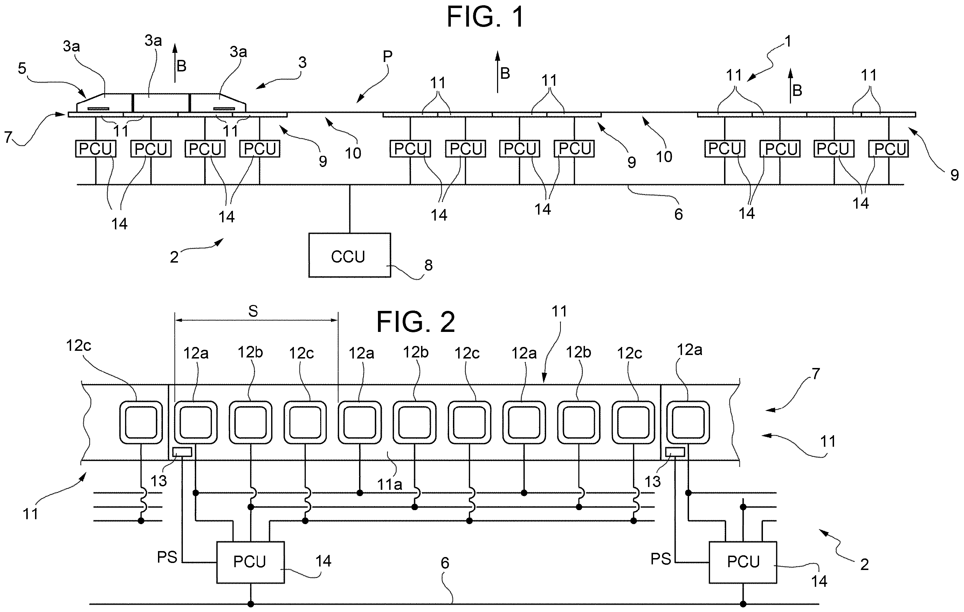

Number 1 in Figure 1 indicates as a whole a transportation system in accordance with one embodiment of the present invention, and which comprises a magnetic field generating device 2 for generating a magnetic field B along a given path P; and at least one transportation unit 3 movable along path P and equipped with a propulsion device 5 which interacts with magnetic field B.

Magnetic field generating device 2 comprises a supply source 6; and a stator 7 extending along path P.

Stator 7 comprises a central control device 8; and a plurality of stator segments 9 arranged successively along path P and separated by interruption regions 10. Each stator segment 9 comprises one or more consecutive, contiguous modules 11.

As shown in Figure 2, in one embodiment, each module 11 comprises a plurality of windings 12a, 12b, 12c embedded in an elongated body 11a and divided into groups, each corresponding to a respective electric phase; a proximity sensor 13; and a peripheral control device 14 connected to supply source 6. Windings 12a, 12b, 12c are arranged successively along the module 11 of stator segment 9 of which they form part. More specifically, windings 12a, 12b, 12c are arranged so that the phases succeed and alternate with one another, and with a constant spacing S between successive windings 12a, 12b, 12c corresponding to the same phase. In another embodiment, one peripheral control device is shared by a plurality of modules of the same stator segment or of separate stator segments.

Proximity sensor 13 is designed to supply a proximity signal PS to peripheral control device 14 in response to passage of transportation unit 3. Peripheral control device 14 in turn supplies windings 12a, 12b, 12c from supply source 6 in response to proximity signal PS, so as to generate magnetic field B in the portion of path P where transportation unit 3 is located. More specifically, windings 12a, 12b, 12c are controlled so that magnetic field B is variable and travels along path P. For example, magnetic field B varies sinusoidally. For this purpose, peripheral control devices 14 may be coordinated by central control device 8.

In the embodiment shown, stator segments 9 are located beneath the travel surface of transportation unit 3, e.g. just below the road surface (Figure 1). Alternatively, the stator segments may be laid on the travel surface, e.g. on the surface of a preferential public transport lane.

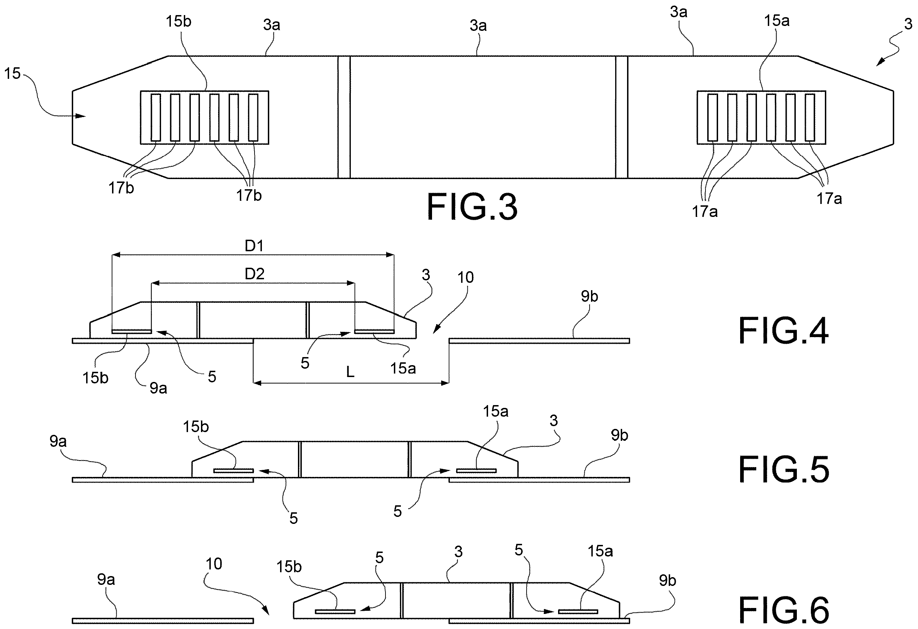

With reference to Figure 3, transportation unit 3 comprises a plurality of wheel-mounted cars 3a connected in a train. It is understood, however, that the transportation unit may equally comprise : a trolley; one car with a cab and one or more trolleys; or a plurality of wheel-mounted trolleys, cars or cabs connected in a train.

Transportation unit 3 may also run along guides extending along path P (like train or tram lines), or may be driven freely along path P by a driver (like a bus line).

Transportation unit 3 houses propulsion device 5, which, in the embodiment described, comprises a magnetic interaction assembly 15 housed on transportation unit 3; and fasteners, not shown, for connecting magnetic interaction assembly 15 rigidly, for example, to a frame of transportation unit 3.

Magnetic interaction assembly 15 comprises a first slider 15a and a second slider 15b located in a front and rear portion of transportation unit 3 respectively (here and hereinafter, the terms 'front' and 'rear' refer to the current travelling direction of transportation unit 3, even in the case of transportation units capable of travelling in opposite directions.

First slider 15a and second slider 15b respectively comprise first permanent magnets 17a and second permanent magnets 17b arranged to interact with the magnetic field B generated by magnetic field generating device 2. More specifically, first slider 15a and second slider 15b form a linear electric motor with stator 7. First slider 15a and second slider 15b are positioned facing stator 7, are separated from it by a constant gap, and define a moving element of the linear electric motor. In other words, interaction of first permanent magnets 17a and second permanent magnets 17b with magnetic field B causes first slider 15a and second slider 15b to move and draw transportation unit 3 along path P.

As shown in Figures 4-6, first slider 15a and second slider 15b are arranged so that the length of each interruption region 10 is shorter than the distance D1 between the front end of first slider 15a and the rear end of second slider 15b. More specifically, Figures 4-6 show a first stator segment 9a and a second stator segment 9b separated by an interruption region 10 of length L (for the sake of simplicity, here and hereinafter, the other interruption regions 10 are assumed to be shorter in length than length L). In one embodiment, length L of interruption region 10 is also shorter than a distance D2 between first slider 15a and second slider 15b. It is understood, however, that the length of each interruption region 10 is such that the average R.M.S. value of the magnetic field is less at interruption region 10 than at any one of active stator segments 9.

Because length L is shorter than distances D1 and D2, at least one of first and second sliders 15a and 15b interacts with magnetic field B as transportation unit 3 crosses interruption region 10, thus preventing the drive force from being cut off. Figure 4 shows transportation unit 3 as it starts to cross interruption region 10. At this stage, first slider 15a is ineffective in propelling transportation unit 3, but second slider 15b, positioned facing first stator segment 9a, is able to compensate for the partial loss in drive force. Before second slider 15b reaches interruption region 10 (Figure 5), first slider 15a has already reached second stator segment 9b, and is able to compensate for the loss in drive force as long as second slider 15b is interruption region 10 (Figure 6).

The transportation system described therefore provides for getting over fairly long interruption regions, such as at intersections between path P and cross roads or transportation lines.

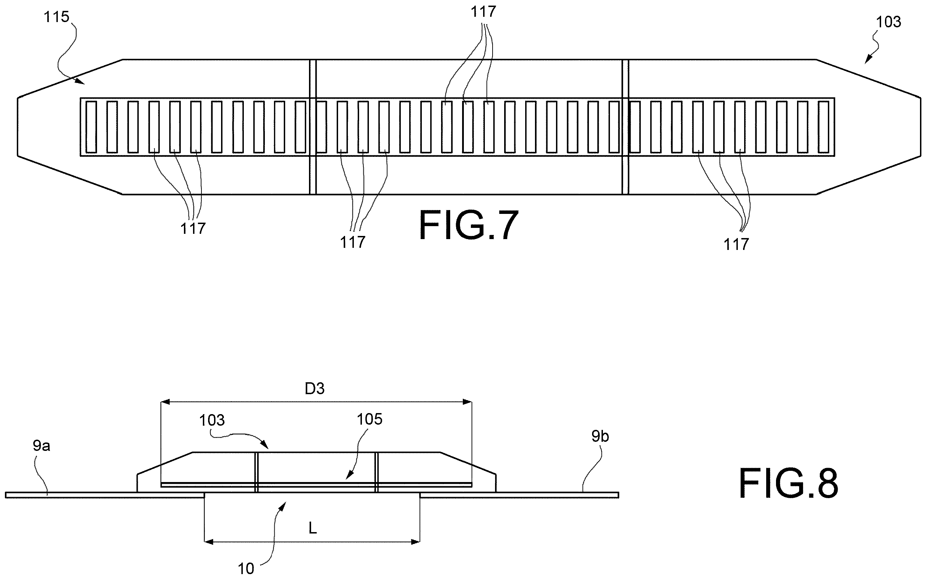

In the Figure 7 and 8 embodiment of the invention, a transportation unit 103 comprises a propulsion device 105, in which a magnetic interaction assembly 115 is defined by a single slider extending substantially uninterruptedly between the front and rear end of magnetic interaction assembly 115. More specifically, the slider comprises a plurality of permanent magnets 117 facing stator 7 and arranged successively between the front and rear end of magnetic interaction assembly 115.

The length D3 of the slider defines the distance between the front and rear end of magnetic interaction assembly 115, and is greater than the length of each interruption region 10 (Figure 8).

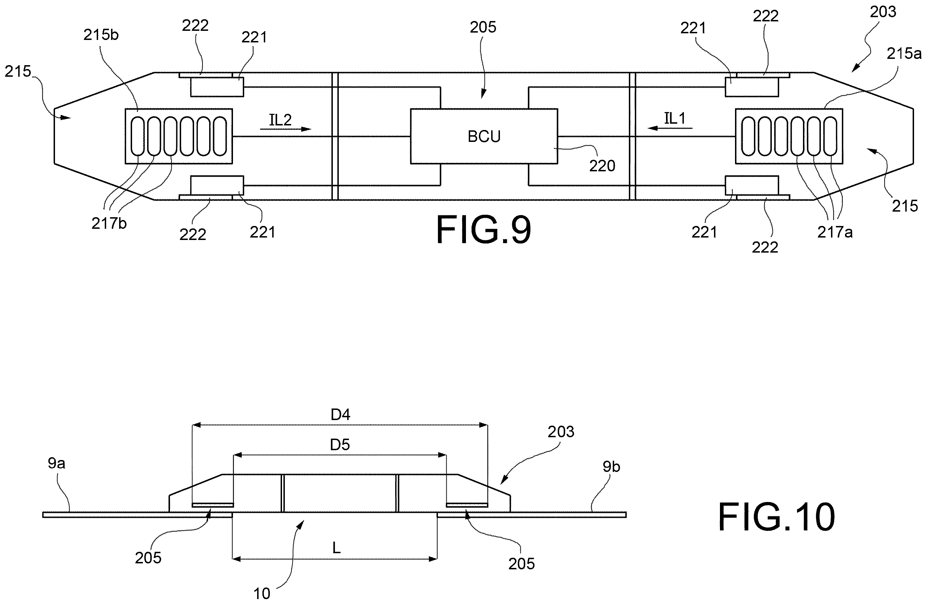

Figures 9-11 show a further embodiment of the invention, in which a transportation unit 203 has a propulsion device 205 comprising a magnetic interaction assembly 215; an on-board control unit 220; and a plurality of rotary electric motors 221 connected to respective drive wheels 222. For example, a first group of electric motors 221 is connected to front drive wheels, and a second group of electric motors 221 is connected to rear drive wheels.

Magnetic interaction assembly 215 is coupled inductively to stator 7 of magnetic field generating device 2. In other words, stator 7 and magnetic interaction assembly 215 define a transformer primary winding and secondary winding respectively. More specifically, magnetic interaction assembly 215 comprises a first slider 215a and a second slider 215b. First slider 215a and second slider 215b respectively comprise a first inductive element 217a and a second inductive element 217b, which face stator 7 to link a first magnetic field flux and second magnetic field flux respectively. First inductive element 217a and second inductive element 217b supply on-board control unit 220a with a first induced current IL1 and second induced current IL2 respectively, as a result of variations in the respective linked magnetic field fluxes. In one embodiment, first inductive element 217a and second inductive element 217b comprise a plurality of windings facing stator 7. Alternatively, first inductive element 217a and second inductive element 217b may comprise any magnetic flux linking conductor, such as a grille.

First slider 215a and second slider 215b are arranged so that the length of each interruption region 10 between pairs of stator segments 9 is shorter than the distance D4 between the front and rear end of magnetic interaction assembly 215. In one embodiment, a distance D5 between first slider 215a and second slider 215b is also greater than the length of each interruption region 10 between pairs of stator segments 9. By way of example, Figure 10 shows transportation unit 203 travelling over interruption region 10 between first stator segment 9a and second stator segment 9b.

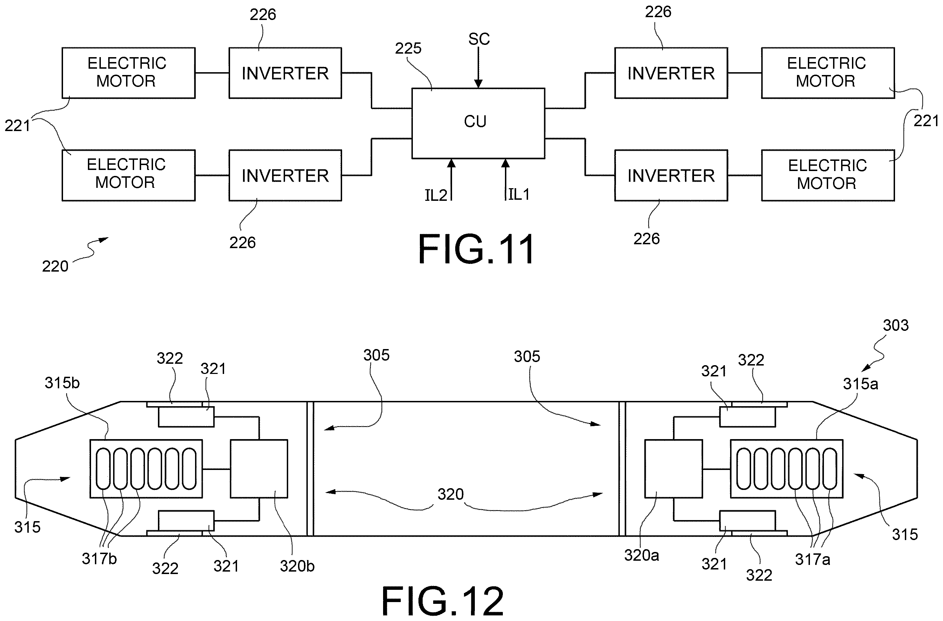

On-board control unit 220 receives first induced current IL1 and second induced current IL2 from first slider 215a and second slider 215b respectively, and uses them to power electric motors 221. In one embodiment (Figure 11), on-board control unit 220 comprises a control unit 225 and, for each electric motor 221, an inverter 226. Control unit 225 receives a control signal CS from an operating station (not shown) on board transportation unit 203, or from central control device 8, and controls inverters 226 on the basis of control signal CS.

In the Figure 12 embodiment, a transportation unit 303 has a propulsion device 305 comprising a magnetic interaction assembly 315; an on-board control unit 320; and a plurality of rotary electric motors 321 connected to respective drive wheels 322.

Magnetic interaction assembly 315 is coupled inductively to stator 7 of magnetic field generating device 2, and is substantially the same as magnetic interaction assembly 215 described with reference to Figure 9. More specifically, magnetic interaction assembly 315 comprises a first slider 315a, a first inductive element 317a, a second slider 315b, and a second inductive element 317b. Moreover, first slider 315a and second slider 315b are arranged so that the length of each interruption region 10 between pairs of stator segments 9 is shorter than the distance between the front and rear end of magnetic interaction assembly 315, and is optionally shorter than a distance between first slider 315a and second slider 315b.

On-board control unit 320 comprises a first control stage 320a and a second control stage 320b.

First control stage 320a is coupled to first slider 315a and to respective electric motors 321, and powers respective electric motors 321 with a first induced current IL1' supplied by first slider 315a.

Second control stage 320b is coupled to second slider 315b and to respective electric motors 321, and powers respective electric motors 321 with a second induced current IL2' supplied by second slider 315b.

Clearly, changes may be made to the transportation system described without, however, departing from the scope of the present invention, as defined in the accompanying Claims.

For example, the invention may also be used to advantage on cable transportation systems with self-clamping transportation units, such as cableways, cable cars, chair lifts, or rail transportation systems. In which case, the linear electric motor may be used to propel the transportation units inside stations.

The magnetic interaction assembly of each transportation unit may even comprise more than two sliders, be they permanent-magnet or inductive sliders, provided the length of each interruption region between stator segments is shorter than the distance between the front and rear end of the magnetic interaction assembly. For example, sliders may be equally spaced lengthwise along the transportation unit.

## Claims

1. A transportation system comprising:
at least one transportation unit (3; 103; 203; 303) movable along a given path (P);
a magnetic field generating device (2; 102; 202; 302) configured to generate a magnetic field (B) along at least a portion of the path (P) and comprising a plurality of windings (12a, 12b, 12c) embedded in an elongated body (11a) and divided into groups, each corresponding to a respective electric phase; and
a propulsion device (5; 105; 205; 305) housed on the transportation unit (3; 103; 203; 303) and cooperating with the magnetic field (B) to move the transportation unit (3; 103; 203; 303) along the path (P);
wherein:
the propulsion device (5; 105; 205; 305) comprises a magnetic interaction assembly (15; 115; 215; 315) housed on the transportation unit (3; 103; 203; 303) and arranged to interact with the magnetic field (B) generated by the magnetic field generating device (2; 102; 202; 302);
the magnetic field generating device (2; 102; 202; 302) comprises at least a first segment (9a) and a second segment (9b) arranged successively along the path (P) and separated by an interruption region (10) of a length (L) shorter than the distance (D1; D3; D4) between the front end and the rear end of the magnetic interaction assembly (15; 115; 215; 315);
the magnetic field generating device (2; 102; 202; 302) comprises a plurality of modules (11) selectively activatable by passage of the transportation unit (3; 103; 203; 303); and
wherein each module (11) comprises:
a peripheral control device (14) connected to a supply source (6), the peripheral control devices (14) of the modules (11) being coordinated by the central control device (8); and
a proximity sensor (13);
**characterized in that**:
the magnetic field generating device (2; 102; 202; 302) comprises a central control device (8);
each stator segment (9) comprises respective consecutive, contiguous modules (11) of the plurality of modules (11);
the proximity sensor (13) of each module (11) is configured to supply a proximity signal (PS) to the respective peripheral control device (14) in response to passage of the transportation unit (3);
wherein the peripheral control device (14) is configured to supply the windings (12a, 12b, 12c) from the supply source (6) in response to the proximity signal (PS);
and wherein the length (L) of the interruption region (10) is such that an average R.M.S. value of the magnetic field (B) is less in the interruption region (10) than in the first segment (9a) and second segment (9b) when active.

2. A system as claimed in Claim 1, wherein the magnetic field generating device (2; 102; 202; 302) comprises further segments (9) separated by further interruption regions (10), each of a length (L) shorter than the distance (D1; D3; D4) between the front end and the rear end of the magnetic interaction assembly (15; 115; 215; 315).

3. A system as claimed in any one of the foregoing Claims, wherein the magnetic interaction assembly (15; 115; 215; 315) extends substantially uninterruptedly between the front end and the rear end of the magnetic interaction assembly (15; 115; 215; 315).

4. A system as claimed in any one of Claims 1 or 2, wherein the magnetic interaction assembly (15; 215; 315) comprises a first magnetic-field-responsive element (15a; 215a; 315a) and a second magnetic-field-responsive element (15b; 215b; 315b) located in a front portion and a rear portion respectively of the transportation unit (3; 203; 303); and the length (L) of the interruption region (10) is shorter than the distance (D1; D4) between the first magnetic-field-responsive element (15a; 215a; 315a) and the second magnetic-field-responsive element (15b; 215b; 315b).

5. A system as claimed in any one of the foregoing Claims, wherein the magnetic field generating device (2; 102) and the magnetic interaction assembly (5; 115) form a linear electric motor.

6. A system as claimed in Claim 5, wherein the magnetic interaction assembly (15; 115) is a permanent-magnet type.

7. A system as claimed in Claim 5 or 6 when dependent on Claim 4, wherein the first magnetic-field-responsive element (15a) and second magnetic-field-responsive element (15b) respectively comprise first permanent magnets (17a; 117) and second permanent magnets (17b; 117), arranged so that interaction of the first permanent magnets (17a; 117) and second permanent magnets (17b; 117) with the magnetic field (B) causes the transportation unit (3; 103; 203; 303) to move along the path (P).

8. A system as claimed in any one of Claims 5 to 7, wherein the magnetic field generating device (2; 102; 202; 302) extends along the path (P) and defines the stator (7) of the linear electric motor.

9. A system as claimed in Claim 8, wherein the magnetic field (B) is a variable magnetic field travelling along the path (P).

10. A system as claimed in any one of Claims 1 to 4, wherein the magnetic interaction assembly (215; 315) is inductive and arranged to link a magnetic field flux.

11. A system as claimed in Claim 10, wherein the magnetic field generating device (202; 302) and the magnetic interaction assembly (215; 315) form a transformer.

12. A system as claimed in Claim 10 or 11, wherein the propulsion device (205, 305) comprises an electric motor assembly (221; 321) connected to drive wheels (222; 322) of the transportation unit (203; 303); and a on-board control unit (220; 320) configured to receive induced current (IL1, IL2; IL1', IL2') produced by variations in the magnetic field flux linked by the magnetic interaction assembly (215; 315), and to supply the electric motor assembly (221; 321) using the induced current.

13. A system as claimed in Claim 12, wherein the on-board control unit (220; 320) comprises an inverter (226) .

14. A system as claimed in any one of Claims 10 to 13 when dependent on Claim 4, wherein the first magnetic-field-responsive element (215a; 315a) and second magnetic-field-responsive element (215b; 315b) respectively comprise a first conductor (217a; 317a) and a second conductor (217b; 317b) arranged to link a first magnetic field flux and second magnetic field flux respectively.

15. A system as claimed in Claim 14, wherein the electric motor assembly (221; 321) comprises a first rotary electric motor connected to at least a first drive wheel (222; 322); and a second rotary electric motor connected to at least a second drive wheel (222; 322) .

16. A system as claimed in Claim 15, wherein the on-board control unit (320) comprises:
a first control stage (320a) configured to receive a first induced current (IL1; IL1') produced by variations in the magnetic field flux linked by the first conductor (317a), and to supply the first rotary electric motor using the first induced current (IL1; IL1'); and
a second control stage (320b) configured to receive a second induced current (IL2; IL2') produced by variations in the magnetic field flux linked by the second conductor (217b; 317b), and to supply the second rotary electric motor using the second induced current (IL2; IL2').

17. A system as claimed in any one of the foregoing Claims, wherein the magnetic field generating device (2; 102; 202; 302) comprises a plurality of windings (12a, 12b, 12c) in groups, each corresponding to a respective electric phase; wherein the windings (12a, 12b, 12c) are arranged successively along the first segment (9a) and second segment (9b) so that the phases succeed one another in a given sequence and with a constant spacing (S) between successive windings (12a, 12b, 12c) corresponding to the same phase; and wherein the length (L) of the interruption region (10) is greater than the spacing (S).

18. A system as claimed in Claim 17, wherein the magnetic field generating device (2; 102; 202; 302) comprises an elongated body (11a) housing the windings (12a, 12b, 12c); and the elongated body (11a) extends along the path (P) and is located on a travelling surface of the transportation unit (3; 103; 203; 303) or under the travelling surface of the transportation unit (3; 103; 203; 303).

## Patentansprüche

1. Transportsystem, umfassend:
zumindest eine Transporteinheit (3; 103; 203; 303), die entlang einer gegebenen Strecke (P) bewegbar ist;
eine Magnetfelderzeugungsvorrichtung (2; 102; 202; 302), die konfiguriert ist, ein Magnetfeld (B) entlang zumindest eines Abschnitts der Strecke (P) zu erzeugen, und die eine Mehrzahl von Wicklungen (12a, 12b, 12c) umfasst, die in einen länglichen Körper (11a) eingebettet und in Gruppen unterteilt sind, die jeweils einer jeweiligen elektrischen Phase entsprechen; und
eine Antriebsvorrichtung (5; 105; 205; 305), die an der Transporteinheit (3; 103; 203; 303) untergebracht ist und mit dem Magnetfeld (B) zusammenwirkt, um die Transporteinheit (3; 103; 203; 303) entlang der Strecke (P) zu bewegen;
wobei:
die Antriebsvorrichtung (5; 105; 205; 305) eine Magnetinteraktionsanordnung (15; 115; 215; 315) umfasst, die an der Transporteinheit (3; 103; 203; 303) untergebracht und so angeordnet ist, dass sie mit dem Magnetfeld (B) interagiert, das von der Magnetfelderzeugungsvorrichtung (2; 102; 202; 302) erzeugt wird,
die Magnetfelderzeugungsvorrichtung (2; 102; 202; 302) zumindest ein erstes Segment (9a) und ein zweites Segment (9b) umfasst, die entlang der Strecke (P) aufeinanderfolgend angeordnet sind und durch einen Unterbrechungsbereich (10) einer Länge (L) getrennt sind, die kürzer als die Distanz (D1; D3; D4) zwischen dem vorderen Ende und dem hinteren Ende der Magnetinteraktionsanordnung (15; 115; 215; 315) ist;
die Magnetfelderzeugungsvorrichtung (2; 102; 202; 302) eine Mehrzahl von Modulen (11) umfasst, die durch den Durchgang der Transporteinheit (3; 103; 203; 303) selektiv aktivierbar sind; und
wobei jedes Modul (11) umfasst:
eine periphere Steuerungs- bzw. Regelungsvorrichtung (14), die mit einer Versorgungsquelle (6) verbunden ist, wobei die peripheren Steuerungs- bzw. Regelungsvorrichtungen (14) der Module (11) von der zentralen Steuerungs- bzw. Regelungsvorrichtung (8) koordiniert werden; und
einen Näherungssensor (13);
**dadurch gekennzeichnet, dass**:
die Magnetfelderzeugungsvorrichtung (2; 102; 202; 302) eine zentrale Steuerungs- bzw. Regelungsvorrichtung (8) umfasst;
jedes Statorsegment (9) jeweilige aufeinanderfolgende, zusammenhängende Module (11) der Mehrzahl von Modulen (11) umfasst;
der Näherungssensor (13) jedes Moduls (11) konfiguriert ist, ein Näherungssignal (PS) an die jeweilige periphere Steuerungs- bzw. Regelungsvorrichtung (14) als Antwort auf das Passieren der Transporteinheit (3) zu liefern;
wobei die periphere Steuerungs- bzw. Regelungsvorrichtung (14) konfiguriert ist, die Wicklungen (12a, 12b, 12c) von der Versorgungsquelle (6) aus als Antwort auf das Näherungssignal (PS) zu versorgen;
und wobei die Länge (L) des Unterbrechungsbereichs (10) derart ist, dass ein durchschnittlicher R.M.S.-Wert des Magnetfelds (B) in dem Unterbrechungsbereich (10) geringer ist als in dem ersten Segment (9a) und dem zweiten Segment (9b), wenn es aktiv bzw. sie aktiv sind.

2. System nach Anspruch 1, wobei die Magnetfelderzeugungsvorrichtung (2; 102; 202; 302) weitere Segmente (9) umfasst, die durch weitere Unterbrechungsbereiche (10) getrennt sind, wobei jeweils eine Länge (L) kürzer ist als die Distanz (D1; D3; D4) zwischen dem vorderen Ende und dem hinteren Ende der Magnetinteraktionsanordnung (15; 115; 215; 315).

3. System nach einem der vorhergehenden Ansprüche, wobei sich die Magnetinteraktionsanordnung (15; 115; 215; 315) im Wesentlichen ununterbrochen zwischen dem vorderen Ende und dem hinteren Ende der Magnetinteraktionsanordnung (15; 115; 215; 315).

4. System nach einem der Ansprüche 1 oder 2, wobei die Magnetinteraktionsanordnung (15; 215; 315) ein erstes auf ein Magnetfeld ansprechendes Element (15a; 215a; 315a) und ein zweites auf ein Magnetfeld ansprechendes Element (15b; 215b; 315b) umfasst, die sich in einem vorderen Abschnitt bzw. einem hinteren Abschnitt der Transporteinheit (3; 203; 303) befinden; und wobei die Länge (L) des Unterbrechungsbereichs (10) kürzer ist als die Distanz (D1; D4) zwischen dem ersten auf ein Magnetfeld ansprechenden Element (15a; 215a; 315a) und dem zweiten auf ein Magnetfeld ansprechenden Element (15b; 215b; 315b).

5. System nach einem der vorangehenden Ansprüche, wobei die Magnetfelderzeugungsvorrichtung (2; 102) und die Magnetinteraktionsanordnung (5; 115) einen elektrischen Linearmotor bilden.

6. System nach Anspruch 5, wobei die Magnetinteraktionsanordnung (15; 115) ein Permanentmagnettyp ist.

7. System nach Anspruch 5 oder 6, wenn von Anspruch 4 abhängig, wobei das erste auf ein Magnetfeld ansprechende Element (15a) und das zweite auf ein Magnetfeld ansprechende Element (15b) jeweils erste Permanentmagnete (17a; 117) und zweite Permanentmagnete (17b; 117) umfassen, die so angeordnet sind, dass eine Interaktion der ersten Permanentmagnete (17a; 117) und der zweiten Permanentmagnete (17b; 117) mit dem Magnetfeld (B) die Transporteinheit (3; 103; 203; 303) veranlasst, sich entlang der Strecke (P) zu bewegen.

8. System nach einem der Ansprüche 5 bis 7, wobei sich die Magnetfelderzeugungsvorrichtung (2; 102; 202; 302) entlang der Strecke (P) erstreckt und den Stator (7) des elektrischen Linearmotors definiert.

9. System nach Anspruch 8, wobei das Magnetfeld (B) ein variables Magnetfeld ist, das sich entlang der Strecke (P) bewegt.

10. System nach einem der Ansprüche 1 bis 4, wobei die Magnetinteraktionsanordnung (215; 315) induktiv ist und so angeordnet ist, dass sie einen Magnetfeldfluss verbindet.

11. System nach Anspruch 10, wobei die Magnetfelderzeugungsvorrichtung (202; 302) und die Magnetinteraktionsanordnung (215; 315) einen Transformator bilden.

12. System nach Anspruch 10 oder 11, wobei die Antriebsvorrichtung (205, 305) eine Elektromotoranordnung (221; 321), die mit Antriebsrädern (222; 322) der Transporteinheit (203; 303) verbunden ist; und eine On-Board- bzw. eingebaute Steuerungs- bzw. Regelungseinheit (220; 320) umfasst, die konfiguriert ist, induzierten Strom (IL1, IL2; IL1', IL2') zu empfangen, der durch Schwankungen des Magnetfeldflusses erzeugt wird, der durch die Magnetinteraktionsanordnung (215; 315) verbunden ist, und die Elektromotoranordnung (221; 321) unter Verwendung des induzierten Stroms zu versorgen.

13. System nach Anspruch 12, wobei die eingebaute Steuerungs- bzw. Regelungseinheit (220; 320) einen Wechselrichter (226) umfasst.

14. System nach einem der Ansprüche 10 bis 13, wenn von Anspruch 4 abhängig, wobei das erste auf ein Magnetfeld ansprechende Element (215a; 315a) und das zweite auf ein Magnetfeld ansprechende Element (215b; 315b) jeweils einen ersten Leiter (217a; 317a) und einen zweiten Leiter (217b; 317b) umfassen, die angeordnet sind, einen ersten Magnetfeldfluss bzw. einen zweiten Magnetfeldfluss zu verbinden.

15. System nach Anspruch 14, wobei die Elektromotoranordnung (221; 321) einen ersten rotierenden Elektromotor, der mit zumindest einem ersten Antriebsrad (222; 322) verbunden ist; und einen zweiten rotierenden Elektromotor umfasst, der mit zumindest einem zweiten Antriebsrad (222; 322) verbunden ist.

16. System nach Anspruch 15, wobei die eingebaute Steuerungs- bzw. Regelungseinheit (320) umfasst:
eine erste Steuerungs- bzw. Regelungsstufe (320a), die konfiguriert ist, einen ersten induzierten Strom (IL1; IL1') zu empfangen, der durch Schwankungen des Magnetfeldflusses verbunden durch den ersten Leiter (317a) erzeugt wird, und den ersten rotierenden Elektromotor unter Verwendung des ersten induzierten Stroms (IL1; IL1') zu versorgen; und
eine zweite Steuerungs- bzw. Regelungsstufe (320b), die konfiguriert ist, einen zweiten induzierten Strom (IL2; IL2') zu empfangen, der durch Schwankungen des Magnetfeldflusses verbunden durch den zweiten Leiter (217b; 317b) erzeugt wird, und den zweiten rotierenden Elektromotor unter Verwendung des zweiten induzierten Stroms (IL2; IL2') zu versorgen.

17. System nach einem der vorhergehenden Ansprüche, wobei die Magnetfelderzeugungsvorrichtung (2; 102; 202; 302) eine Mehrzahl von Wicklungen (12a, 12b, 12c) in Gruppen umfasst, die jeweils einer jeweiligen elektrischen Phase entsprechen; wobei die Wicklungen (12a, 12b, 12c) nacheinander entlang des ersten Segments (9a) und des zweiten Segments (9b) angeordnet sind, so dass die Phasen in einer gegebenen Reihenfolge und mit einem konstanten Abstand (S) zwischen aufeinanderfolgenden Wicklungen (12a, 12b, 12c), die derselben Phase entsprechen, aufeinanderfolgen; und wobei die Länge (L) des Unterbrechungsbereichs (10) größer ist als der Abstand (S).

18. System nach Anspruch 17, wobei die Magnetfelderzeugungsvorrichtung (2; 102; 202; 302) einen länglichen Körper (11a) umfasst, der die Wicklungen (12a, 12b, 12c) aufnimmt; und wobei sich der längliche Körper (11a) entlang der Strecke (P) erstreckt und sich an einer sich bewegenden Fläche bzw. Oberfläche der Transporteinheit (3; 103; 203; 303) oder unter der sich bewegenden Fläche der Transporteinheit (3; 103; 203; 303) befindet.

## Revendications

1. Un système de transport comprenant :
au moins une unité de transport (3 ; 103 ; 203 ; 303) mobile le long d'un chemin donné (P) ;
un dispositif de génération de champ magnétique (2 ; 102 ; 202 ; 302) configuré pour générer un champ magnétique (B) le long d'au moins une partie du chemin (P) et comprenant une pluralité d'enroulements (12a, 12b, 12c) noyés dans un corps allongé (Ila) et divisés en groupes, chacun correspondant à une phase électrique respective ; et
un dispositif de propulsion (5 ; 105 ; 205 ; 305) logé sur l'unité de transport (3 ; 103 ; 203 ; 303) et coopérant avec le champ magnétique (B) pour déplacer l'unité de transport (3 ; 103 ; 203 ; 303) le long du chemin (P) ;
dans laquelle :
le dispositif de propulsion (5 ; 105 ; 205 ; 305) comprend un ensemble d'interaction magnétique (15 ; 115 ; 215 ; 315) logé sur l'unité de transport (3 ; 103 ; 203 ; 303) et agencé pour interagir avec le champ magnétique (B) généré par le dispositif de génération de champ magnétique (2 ; 102 ; 202 ; 302) ;
le dispositif de génération de champ magnétique (2 ; 102 ; 202 ; 302) comprend au moins un premier segment (9a) et un second segment (9b) disposés successivement le long du chemin (P) et séparés par une région d'interruption (10) d'une longueur (L) plus courte que la distance (D1 ; D3 ; D4) entre l'extrémité avant et l'extrémité arrière de l'ensemble d'interaction magnétique (15 ; 115 ; 215 ; 315) ;
le dispositif de génération de champ magnétique (2 ; 102 ; 202 ; 302) comprend une pluralité de modules (11) activables sélectivement par le passage de l'unité de transport (3 ; 103 ; 203 ; 303) ; et
dans lequel chaque module (11) comprend
un dispositif de commande périphérique (14) connecté à une source d'alimentation (6), les dispositifs de commande périphériques (14) des modules (11) étant coordonnés par le dispositif de commande central (8) ; et
un capteur de proximité (13) ;
**caractérisé en ce que**
le dispositif de génération de champ magnétique (2 ; 102 ; 202 ; 302) comprend un dispositif de commande central (8) ;
chaque segment de stator (9) comprend des modules respectifs consécutifs et contigus (11) de la pluralité de modules (11) ;
le capteur de proximité (13) de chaque module (11) est configuré pour fournir un signal de proximité (PS) au dispositif de commande périphérique (14) respectif en réponse au passage de l'unité de transport (3) ;
dans lequel le dispositif de commande périphérique (14) est configuré pour alimenter les enroulements (12a, 12b, 12c) à partir de la source d'alimentation (6) en réponse au signal de proximité (PS) ;
et dans lequel la longueur (L) de la région d'interruption (10) est telle qu'une valeur R.M.S. moyenne du champ magnétique (B) est plus faible dans la région d'interruption (10) que dans le premier segment (9a) et le second segment (9b) lorsqu'ils sont actifs

2. Système selon la revendication 1, dans lequel le dispositif de génération de champ magnétique (2 ; 102 ; 202 ; 302) comprend d'autres segments (9) séparés par d'autres régions d'interruption (10), chacun d'une longueur (L) plus courte que la distance (D1 ; D3 ; D4) entre l'extrémité avant et l'extrémité arrière de l'ensemble d'interaction magnétique (15 ; 115 ; 215 ; 315).

3. Système selon l'une quelconque des revendications précédentes, dans lequel l'ensemble d'interaction magnétique (15 ; 115 ; 215 ; 315) s'étend de manière sensiblement ininterrompue entre l'extrémité avant et l'extrémité arrière de l'ensemble d'interaction magnétique (15 ; 115 ; 215 ; 315).

4. Système selon l'une quelconque des revendications 1 ou 2, dans lequel l'ensemble d'interaction magnétique (15 ; 215 ; 315) comprend un premier élément sensible au champ magnétique (15a ; 215a ; 315a) et un second élément sensible au champ magnétique (15b ; 215b ; 315b) situés respectivement dans une partie avant et une partie arrière de l'unité de transport (3 ; 203 ; 303) ; et la longueur (L) de la région d'interruption (10) est plus courte que la distance (D1 ; D4) entre le premier élément sensible au champ magnétique (15a ; 215a ; 315a) et le second élément sensible au champ magnétique (15b ; 215b ; 315b).

5. Système selon l'une quelconque des revendications précédentes, dans lequel le dispositif de génération de champ magnétique (2 ; 102) et l'ensemble d'interaction magnétique (5 ; 115) forment un moteur électrique linéaire.

6. Système selon la revendication 5, dans lequel l'ensemble d'interaction magnétique (15 ; 115) est du type à aimant permanent.

7. Système selon la revendication 5 ou 6 lorsqu'il dépend de la revendication 4, dans lequel le premier élément sensible au champ magnétique (15a) et le second élément sensible au champ magnétique (15b) comprennent respectivement des premiers aimants permanents (17a ; 117) et des seconds aimants permanents (17b ; 117), agencés de sorte que l'interaction des premiers aimants permanents (17a ; 117) et des seconds aimants permanents (17b ; 117) avec le champ magnétique (B) amène l'unité de transport (3 ; 103 ; 203 ; 303) à se déplacer le long du trajet (P).

8. Système selon l'une quelconque des revendications 5 à 7, dans lequel le dispositif de génération de champ magnétique (2 ; 102 ; 202 ; 302) s'étend le long du chemin (P) et définit le stator (7) du moteur électrique linéaire.

9. Système selon la revendication 8, dans lequel le champ magnétique (B) est un champ magnétique variable se déplaçant le long du chemin (P).

10. Système selon l'une quelconque des revendications 1 à 4, dans lequel l'ensemble d'interaction magnétique (215 ; 315) est inductif et agencé pour relier un flux de champ magnétique.

11. Système selon la revendication 10, dans lequel le dispositif de génération de champ magnétique (202 ; 302) et l'ensemble d'interaction magnétique (215 ; 315) forment un transformateur.

12. Système selon la revendication 10 ou 11, dans lequel le dispositif de propulsion (205, 305) comprend un ensemble moteur électrique (221 ; 321) relié à des roues motrices (222 ; 322) de l'unité de transport (203 ; 303) ; et une unité de commande embarquée (220 ; 320) configurée pour recevoir un courant induit (IL1, IL2 ; IL1', IL2') produit par des variations du flux de champ magnétique lié par l'ensemble d'interaction magnétique (215 ; 315), et pour alimenter l'ensemble moteur électrique (221 ; 321) en utilisant le courant induit.

13. Système selon la revendication 12, dans lequel l'unité de commande embarquée (220 ; 320) comprend un onduleur (226).

14. Système selon l'une quelconque des revendications 10 à 13 lorsqu'il dépend de la revendication 4, dans lequel le premier élément sensible au champ magnétique (215a ; 315a) et le second élément sensible au champ magnétique (215b ; 315b) comprennent respectivement un premier conducteur (217a ; 317a) et un second conducteur (217b ; 317b) agencés pour relier respectivement un premier flux de champ magnétique et un second flux de champ magnétique.

15. Système selon la revendication 14, dans lequel l'ensemble moteur électrique (221 ; 321) comprend un premier moteur électrique rotatif relié à au moins une première roue motrice (222 ; 322) ; et un second moteur électrique rotatif relié à au moins une seconde roue motrice (222 ; 322).

16. Système selon la revendication 15, dans lequel l'unité de commande embarquée (320) comprend :
un premier étage de commande (320a) configuré pour recevoir un premier courant induit (IL1 ; IL1') produit par des variations du flux de champ magnétique lié par le premier conducteur (317a), et pour alimenter le premier moteur électrique rotatif en utilisant le premier courant induit (IL1 ; IL1') ; et
un deuxième étage de commande (320b) configuré pour recevoir un deuxième courant induit (IL2 ; IL2') produit par des variations du flux de champ magnétique lié par le deuxième conducteur (217b ; 317b), et pour alimenter le deuxième moteur électrique rotatif en utilisant le deuxième courant induit (IL2 ; IL2").

17. Système selon l'une quelconque des revendications précédentes, dans lequel le dispositif de génération de champ magnétique (2 ; 102 ; 202 ; 302) comprend une pluralité d'enroulements (12a, 12b, 12c) en groupes, chacun correspondant à une phase électrique respective ; dans lequel les enroulements (12a, 12b, 12c) sont disposés successivement le long du premier segment (9a) et du deuxième segment (9b) de sorte que les phases se succèdent dans une séquence donnée et avec un espacement constant (S) entre les enroulements successifs (12a, 12b, 12c) correspondant à la même phase ; et dans lequel la longueur (L) de la région d'interruption (10) est supérieure à l'espacement (S).

18. Système selon la revendication 17, dans lequel le dispositif de génération de champ magnétique (2 ; 102 ; 202 ; 302) comprend un corps allongé (11a) logeant les enroulements (12a, 12b, 12c) ; et le corps allongé (11a) s'étend le long du trajet (P) et est situé sur une surface de déplacement de l'unité de transport (3 ; 103 ; 203 ; 303) ou sous la surface de déplacement de l'unité de transport (3 ; 103 ; 203 ; 303).
